# DEMANDE DE BREVET EUROPEEN

(11) **EP 3 709 178 A1**
(43) Date de publication de la demande: **16.09.2020**
(21) Numéro de dépôt: 20161159.7
(22) Date de dépôt: 05.03.2020
(51) Int. Cl.: G06F 13/362

(54) **PROCÉDÉ DE GESTION D'ACCÈS À UN BUS INFORMATIQUE PARTAGÉ, ET DISPOSITIF ÉLECTRONIQUE CORRESPONDANT**

(30) Priorité: 11.03.2019 FR 1902455
(71) Demandeur: STMicroelectronics (Rousset) SAS, 13790 Rousset (FR); STMICROELECTRONICS SA, 92120 Montrouge (FR)
(72) Inventeur: FERRAND, Olivier, 13620 CARRY LE ROUET (FR); OLSON, Daniel, 13008 MARSEILLE (FR); BEN SAID, Anis, TUNIS (TN); ARDICHVILI, Emmanuel, 06560 VALBONNE (FR)
(74) Mandataire: Casalonga

(57) **Abrégé**

Le procédé de gestion d'accès à un bus (7a, 7b) partagé par des interfaces (5a, 5b), comprend
un déclenchement, lorsque l'accès audit bus est accordé à une des interfaces (5a, 5b), d'un comptage ayant une durée minimale de comptage (DM1, DM2), et
une libération de l'accès accordé à l'une des interfaces (5a, 5b)) et une création d'un point d'arbitrage (PA) à l'issue de la durée minimale (DM1, DM2) si au moins une demande d'accès audit bus (7a, 7b) émanant d'au moins une autre des interfaces (5a, 5b) est reçue pendant la durée minimale de comptage (DM1, DM2).

## Description

Des modes de mise en œuvre et de réalisation de l'invention concernent les dispositifs électroniques, plus particulièrement les dispositifs électroniques destinés à gérer l'accès à un bus partagé par des interfaces.

D'une façon générale, lorsqu'un bus tel qu'un bus de données, est libre, ce bus est configuré pour autoriser l'accès audit bus à une interface qui a effectué une demande d'accès reçue en premier par le bus.

Une fois que l'accès audit bus est accordé, une ou des demandes d'accès ultérieures émanant d'au moins une autre interface sont suspendues ou refusées, jusqu'à la fin d'occupation de l'accès audit bus accordé à ladite interface.

Dans certains cas, le bus peut être occupé de façon quasi-permanente, voire en toute mauvaise foi, si la durée d'occupation de l'accès accordé à ladite interface est trop longue, ce qui est souvent problématique pour des applications temps réel, par exemple des applications d'affichages d'image en temps réel.

Il existe une solution classique qui limite la durée d'occupation de l'accès et fait libérer périodiquement l'accès accordé à l'interface pour créer des points d'arbitrage permettant de déterminer une autre interface à laquelle l'accès au bus sera accordé si d'autres demandes d'accès sont reçues au préalable desdits points d'arbitrage.

Cependant, selon cette solution classique, ladite interface information est obligée de libérer l'accès accordé même s'il n'y a pas d'autre demande d'accès reçue, ce qui ralentit considérablement la vitesse de la transaction effectuée par l'interface.

Une augmentation de la durée d'occupation de l'accès diminue proportionnellement le temps passé lors des phases d'arbitrage et augmente ainsi l'efficacité du bus. Mais cette stratégie génère un temps d'attente (« latency » en langue anglaise) plus important pour les autres interfaces, parfois rédhibitoire en regard de contraintes temps réel du système. C'est pourquoi les points d'arbitrage sont généralement fréquents, ce qui diminue fortement l'efficacité du bus.

Ainsi, il existe un besoin de proposer une solution technique à faible complexité permettant d'augmenter l'efficacité d'un bus partagé par des interfaces tout en évitant d'éventuels problèmes pour des applications temps réel.

Selon un aspect, il est proposé un procédé de gestion d'accès à un bus par des interfaces.

Ce procédé comprend
un déclenchement, lorsque l'accès audit bus est accordé à une des interfaces, d'un comptage ayant une durée minimale de comptage, et une libération de l'accès accordé à l'une des interfaces et une création d'un point d'arbitrage à l'issue de la durée minimale si au moins une demande d'accès audit bus émanant d'au moins une autre des interfaces est reçue pendant la durée minimale de comptage.

En d'autres termes, une fois que l'accès à un bus est accordé à une interface, on ne peut avoir un point d'arbitrage pour accorder l'accès à une autre interface qu'à l'issue d'une durée minimale de comptage. Cette durée minimale de comptage est mise en place pour assurer une taille de transaction minimale de l'interface de façon à assurer une bonne efficacité du bus.

De ce fait, pour ladite au moins une autre des interfaces qui demande l'accès au bus, il suffit d'attendre ladite durée minimale de comptage pour obtenir un point d'arbitrage, ce qui permet avantageusement d'éviter une occupation permanente de l'accès par une seule interface.

Selon un mode de mise en œuvre, le procédé comprend en outre, au point d'arbitrage, un arbitrage d'accès à l'un dudit au moins un bus pour ladite au moins une autre des interfaces de façon à déterminer une interface autorisée, et
une autorisation d'accès audit bus pour l'interface autorisée à la suite dudit arbitrage.

Avantageusement, l'interface qui sera prochainement autorisée à accéder au bus est déterminée au point d'arbitrage créé à la suite de la durée minimale de comptage et on peut appliquer tous les mécanismes d'arbitrage classiques pour déterminer l'interface autorisée.

Selon un autre mode de mise en œuvre, le procédé comprend en outre une libération de l'accès accordé à l'une des interfaces et une autorisation d'accès audit bus pour une autre interface à la suite d'une demande d'accès tardive audit bus émanant de cette autre interface si aucune demande d'accès n'est reçue pendant ladite durée minimale et si la demande d'accès tardive est reçue en premier à la suite de la durée minimale.

Une demande d'accès est considérée comme tardive si elle se produit après l'expiration de la durée minimale de comptage.

Une fois que la durée minimale de comptage est passée, l'interface qui occupe actuellement l'accès est prête à libérer l'accès de façon imminente à la suite de la réception de la prochaine demande d'accès.

Selon un autre mode de mise en œuvre, le procédé comprend en outre une conservation de l'accès accordé à l'une des interfaces jusqu'à la fin d'occupation de l'accès si aucune demande d'accès audit bus n'est reçue avant la fin d'occupation.

Avantageusement, l'interface qui occupe l'accès audit bus peut garder l'accès jusqu'à sa fin d'occupation si aucune demande d'accès n'est reçue pendant la durée d'occupation de l'accès, ce qui peut augmenter considérablement l'efficacité dudit bus.

A titre d'exemple non limitatif, la durée minimale de comptage peut être configurable et correspondre à l'une des interfaces.

Autrement dit, une durée minimale de comptage est dédiée à une interface correspondante et peut être configurée pour être supérieure à une durée exigée pour transmettre une commande et une ou des adresses associées sur ledit bus par ladite interface. Ladite durée exigée n'inclut par contre pas de transmissions d'éventuelles données.

Avantageusement, chaque interface peut avoir une durée minimale de comptage correspondante. Chaque durée minimale de comptage est configurable de façon à équilibrer de manière précise l'utilisation du bus.

Les interfaces peuvent par exemple comporter des interfaces périphériques séries (« Serial Peripheral Interface » SPI : en langue anglaise).

A titre indicatif mais non limitatif, les interfaces périphériques séries peuvent par exemple comporter au moins une interface périphérique série du type octal, communément connue de l'homme du métier sous l'acronyme anglo-saxon OctoSPI (« Octal Serial Peripheral Interface » en langue anglaise).

Ledit bus peut par exemple être un bus de données d'entrée-sortie.

Plus précisément, cela peut par exemple être un cas où plusieurs interfaces périphériques partagent un unique bus de données d'entrée-sortie.

Selon un autre aspect, il est proposé un dispositif électronique comprenant des interfaces chacune comportant un compteur, un bus partagé par les interfaces, et des moyens de commande.

Les moyens de commande sont configurés pour
déclencher, lorsque l'accès audit bus est accordé à une des interfaces, un comptage du compteur de l'une des interfaces ayant une durée minimale de comptage, et
libérer l'accès accordé à l'une des interfaces et créer un point d'arbitrage à l'issue de la durée minimale si au moins une demande d'accès audit bus émanant d'au moins une autre des interfaces est reçue pendant la durée minimale de comptage.

Selon un autre mode de réalisation, les moyens de commande sont en outre configurés pour
effectuer, audit point d'arbitrage, un arbitrage d'accès audit bus pour ladite au moins une autre des interfaces de façon à déterminer une interface autorisée, et
autoriser l'accès audit bus pour l'interface autorisée à la suite dudit arbitrage.

Selon un autre mode de réalisation, les moyens de commande sont en outre configurés pour
libérer l'accès accordé à l'une des interfaces et autoriser l'accès audit bus pour une autre interface à la suite d'une demande d'accès tardive audit bus émanant de cette autre interface si aucune demande d'accès n'est reçue pendant la durée minimale et si la demande d'accès tardive est reçue en premier à la suite de la durée minimale.

Les moyens de commande peuvent par exemple être configurés pour
maintenir l'accès accordé à l'une des interfaces jusqu'à la fin d'occupation de l'accès si aucune demande d'accès audit bus n'est reçue avant la fin d'occupation.

A titre indicatif mais non limitatif, la durée minimale de comptage peut par exemple être configurable et correspond à l'une des interfaces.

Les interfaces peuvent par exemple comporter des interfaces périphériques séries.

Les interfaces périphériques séries peuvent par exemple comporter au moins une interface périphérique série du type octal, (« Octal Serial Peripheral Interface » en langue anglaise).

Ledit bus peut par exemple être un bus de données d'entrée-sortie.

Selon encore un autre aspect, il est proposé un appareil électronique, par exemple un système sur puce, comportant un dispositif tel que défini ci-avant, et un module de multiplexage couplé aux moyens de commande.

Selon un mode de réalisation, le module de multiplexage comporte un jeu de broches d'entrée-sortie destiné à être couplé à des moyens de mémoire comportant plusieurs mémoires externes.

Selon un autre mode de réalisation, le module de multiplexage comporte autant de jeux de broches d'entrée-sortie que d'interfaces et chaque jeu de broches d'entrée-sortie est destiné à être couplé à une mémoire externe.

D'autres avantages et caractéristiques de l'invention apparaîtront à l'examen de la description détaillée de modes de mise en œuvre et de réalisation, nullement limitatifs, et des dessins annexés sur lesquels :
[Fig 1] illustre schématiquement un mode de réalisation de l'invention,
[Fig 2] illustre schématiquement un autre exemple de mode de réalisation de l'invention,
[Fig 3] illustre en diagramme de temps un exemple de mode de mise en œuvre de l'invention,
[Fig 4] illustre en diagramme de temps un autre exemple de mode de mise en œuvre de l'invention.

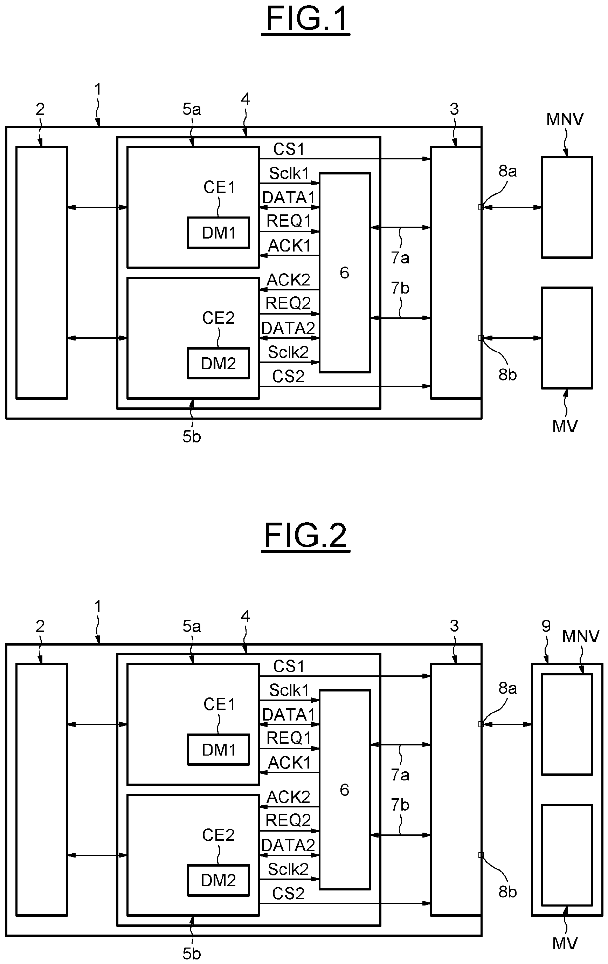

La référence 1 dans la figure 1 désigne un appareil électronique, ici par exemple un système sur puce, communément connu de l'homme du métier sous l'acronyme SOC (« System On Chip » en langue anglaise).

Ce système sur puce 1 comporte
une unité de traitement 2, ici par exemple un microcontrôleur de 32 bits,
un module de multiplexage d'entrée-sortie 3 comportant des broches d'entrée-sortie (« Input/Output Pins » en langue anglaise), et
un dispositif électronique 4 couplé entre l'unité de traitement 2 et le module de multiplexage d'entrée-sortie 3.

Ce dispositif électronique 4 comprend
plusieurs interfaces, ici par exemple une première interface périphérique série 5a et une deuxième interface périphériques série (« Serial Peripheral Interface » en langue anglaise) 5b couplées respectivement à l'unité de traitement 2 et configurées pour communiquer bi-directionnellement des commandes et des données avec l'unité de traitement 2, et
des moyens de commande 6 couplés respectivement aux première et deuxième interfaces 5a, 5b, et au module multiplexage d'entrée-sortie 3 via au moins un bus, ici par exemple un premier bus de données 7a et un deuxième bus de données 7b.

Il convient de noter que l'unité de traitement 2 fonctionne ici en tant que maître (« master » en langue anglaise) vis-à-vis des première et deuxième interfaces périphériques séries 5a, 5b.

Le système sur puce 1 peut par exemple comporter d'autres maîtres comme par exemple un processeur graphique (« Graphics Processing Unit » : GPU en langue anglaise).

A des fins de simplification, on n'illustre que l'unité de traitement 2 sur la figure 1.

Ces première et deuxième interfaces périphériques séries 5a, 5b sont ici par exemple des interfaces périphériques séries du type octal, communément connues sous l'acronyme anglo-saxon OctoSPI (« Octal Serial Peripheral Interface » en langue anglaise).

Avantageusement, ces interfaces OctoSPI 5a, 5b peuvent fournir jusqu'à huit lignes de données pour adresser à un ou des esclaves (« slave » en langue anglaise) vis-à-vis des première et deuxième interfaces périphériques séries 5a, 5b, ici par exemple une mémoire non volatile MNV du type Flash et une mémoire volatile MV du type de mémoire dynamique synchrone à accès aléatoire (« Synchronous Dynamic Random Access Memory » : SDRAM en langue anglaise).

Les première et deuxième interfaces OctoSPI 5a, 5b comportent respectivement un premier compteur CE1 et un deuxième compteur CE2.

Les premier et deuxième compteurs CE1 et CE2 possèdent respectivement une première durée minimale de comptage DM1 et une deuxième durée minimale de comptage DM2.

Ces première et deuxième durée minimale de comptage DM1, DM2 peuvent être identiques ou différentes, et sont configurées pour être supérieures à une durée exigée pour transmettre une commande et une ou des adresses associées sur le premier ou deuxième bus de données 7a, 7b par la première et deuxième interface 5a, 5b, sans inclure des transmissions d'éventuelles données, ce qui permet avantageusement d'équilibrer de manière précise l'utilisation des premier et deuxième bus de données 7a, 7b par les première et deuxième interfaces 5a, 5b correspondantes.

Afin de répondre au mieux au besoin de chaque interface 5a, 5b, c'est-à-dire le besoin de transmettre des données de façon suffisante dans une période donnée, les première et deuxième durées minimales de comptage DM1, DM2 sont configurables et adaptées pour les première et deuxième interfaces 5a, 5b correspondantes.

Le module de multiplexage d'entrée-sortie 3 est configuré pour recevoir un premier signal de sélection CS1 émanant de la première interface 5a, un deuxième signal de sélection CS2 émanant de la deuxième interface 5b, et des données et des signaux d'horloge délivrées par les première et deuxième interfaces 5a, 5b via les premier et deuxième bus de données 7a, 7b, et
faire passer lesdites données et signaux d'horloge aux différentes broches d'entrée-sortie en fonction de la configuration du module de multiplexage d'entrée-sortie 3.

Dans le cas illustré sur la figure 1, les broches d'entrée-sortie comportent ici un premier jeu de broches 8a couplé à la mémoire non volatile MNV du type Flash et un deuxième jeu de broches 8b couplé à la mémoire volatile du type SDRAM.

Dans cette configuration illustrée sur la figure 1, les première et deuxième interfaces 5a, 5b peuvent être simultanément et respectivement associées à un des premier et deuxième jeux de broches 8a, 8b. Chaque interface 5a, 5b comporte également un signal d'horloge correspondant Sclk1, Sclk2 de façon à cadencer la transaction dans la mémoire MNV, MV correspondante.

Les première et deuxième interfaces 5a, 5b sont configurées pour délivrer respectivement des premières données DATAI et des deuxièmes données DATA2 aux moyens de commande 6.

La première interface 5a est en outre configurée pour délivrer un premier signal de demande d'accès REQ1 et recevoir un premier signal de confirmation (« Acknowledgement » en langue anglaise) ACK1 émanant des moyens de commande 6.

De la même façon, la deuxième interface 5b est en outre configurée pour délivrer un deuxième signal de demande d'accès REQ2 et recevoir un deuxième signal de confirmation (« Acknowledgement » en langue anglaise) ACK2 émanant des moyens de commande 6.

Il convient de noter que dans la configuration illustrée sur la figure 1, les premier et deuxième signaux de confirmation peuvent par exemple être activés en même temps grâce aux premier et deuxième jeux de broches 8a, 8b.

Comme on le verra plus loin dans la description, les moyens de commande 6 sont configurés pour gérer des accès aux bus de données 7a, 7b demandés par les première et deuxième interfaces 5a, 5b, notamment lorsque l'accès au premier ou deuxième bus de données 7a, 7b est déjà accordé.

On se réfère à la figure 2 pour illustrer une autre configuration de l'appareil électronique 1 dans laquelle le module de multiplexage d'entrée-sortie 3 est configuré pour couplé à des moyens de mémoire 9, ici par exemple une mémoire multi-puces contenant plusieurs mémoires, ici par exemple la mémoire non volatile MNV et la mémoire volatile MV illustrées précédemment.

Dans ce cas là, un seul jeu de broches d'entrée-sortie, ici par exemple le premier jeu de broches 8a, est utilisé.

Les signaux d'horloge Sclk1, Slck2 et les signaux de sélection CS1, CS2 sont transmis via les moyens de commande 6 et les moyens de commande 6 sont configurés pour déterminer quel signal d'horloge sera transmis aux moyens de mémoire 9 soit via le premier bus de données 7a soit via le deuxième bus de données 7b.

En utilisant les signaux REQ1/ACK1/REQ2/ACK2, les moyens de commande 6 sont configurés pour déterminer de manière dynamique quelle interface, 5a ou 5b, est sélectionnée. Les signaux de l'interface sélectionnée sont ici par exemple envoyés via le bus 7a. Le bus 7b n'est donc pas utilisé dans cette configuration.

Autrement dit, les données délivrées par les première et deuxième interfaces 5a, 5b ne peuvent pas être simultanément transmises aux moyens de mémoire 9.

Avantageusement, le deuxième jeu de broches d'entrée-sortie 8b peut, grâce à l'utilisation du module de multiplexage d'entrée-sortie 3, être utilisé par d'autres interfaces externes.

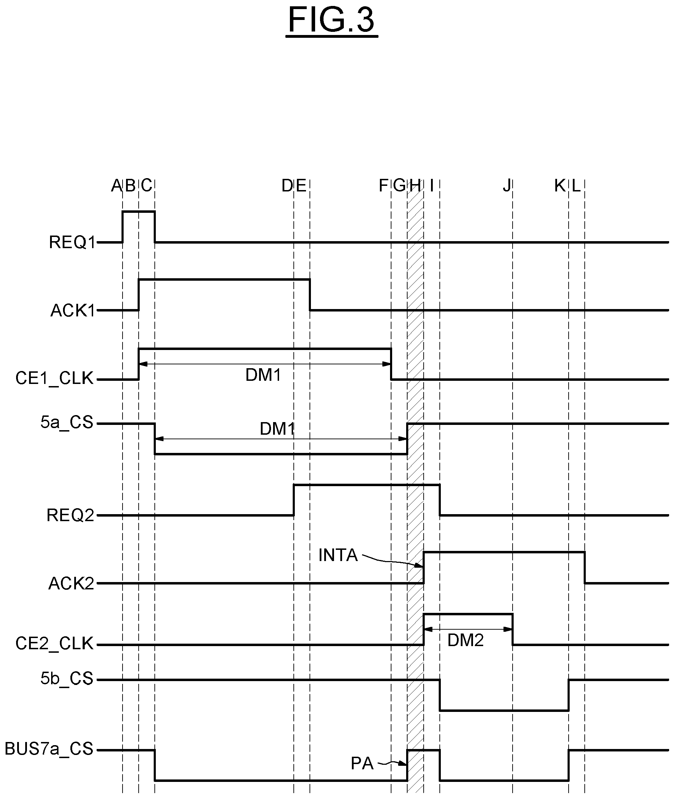

On se réfère maintenant à la figure 3 pour illustrer un exemple de mise en œuvre de la gestion d'accès à un bus de données, ici par exemple le premier bus de données 7a, effectuée par les moyens de commande 6.

Comme illustré sur la figure 3, le premier bus de données 7a n'est pas occupé, c'est-à-dire le signal BUS7a_CS est dans un état haut, avant la réception d'une première demande d'accès émanant de la première interface 5a.

Le signal REQ1 est dans un état haut, à l'instant A.

Les moyens de commande 6 sont configurés pour accorder l'accès au premier bus de données 7a à la première interface 5a au cycle suivant (ACK1 à l'instant B illustré sur la figure 3) et déclencher un comptage (CE1_clk) ayant la première durée minimale de comptage DM1.

Par conséquent, la première interface 5a commence la transaction à l'instant C.

Une demande d'accès REQ2 au premier bus de donnée 7a émanant de la deuxième interface 5b est reçue par les moyens de commande 6 à l'instant D, soit avant la fin de la première durée minimale DM1.

Le signal ACK1 bascule dans l'état bas au cycle suivant (instant E) mais la transaction de la première interface 5a se termine à l'instant G à l'issue de la première durée minimale de comptage (instant F).

Autrement dit, la première interface 5a libère l'accès au premier bus de données 7a à l'instant G et les moyens de commande 6 sont configurés pour créer un point d'arbitrage PA à l'instant G.

Il convient de noter que s'il y a plusieurs demandes d'accès reçues avant la création du point d'arbitrage PA, les moyens de commande 6 sont configurés pour déterminer une interface autorisée INTA en appliquant des algorithmes d'arbitrage classiques connus de l'homme du métier, par exemple en fonction d'ordre de réception, de niveau de priorité, ou de temps d'attente, etc.

Comme il n'y a qu'une demande d'accès à arbitrer ici, les moyens de commande 6 sont en suite configurés pour accorder l'accès au premier bus de données 7a à la deuxième interface 5b en tant qu'interface autorisée INTA à l'instant H et déclencher un comptage (CE2_clk) ayant la deuxième durée minimale de comptage DM2.

La transaction de la deuxième interface 5b débute au cycle suivant à l'instant I.

Si aucune demande d'accès émanant d'une autre interface, ici la première interface 5a, n'est reçue avant la fin d'occupation de l'accès accordé à la deuxième interface 5b, la transaction de la deuxième interface 5b continue et l'accès accordé à la deuxième interface 5b est conservé (ou maintenu) jusqu'à la fin même si le comptage (CE2_clk) ayant la deuxième durée minimale de comptage DM2 est déjà terminé, à savoir à l'instant J.

Comme on peut le constater sur la figure 3, la transaction de la deuxième interface 5b est terminée à l'instant K et le signal ACK2 revient dans son état bas au cycle suivant (instant L). Le signal BUS7a_CS est dans l'état bas lorsqu'il y a une transaction.

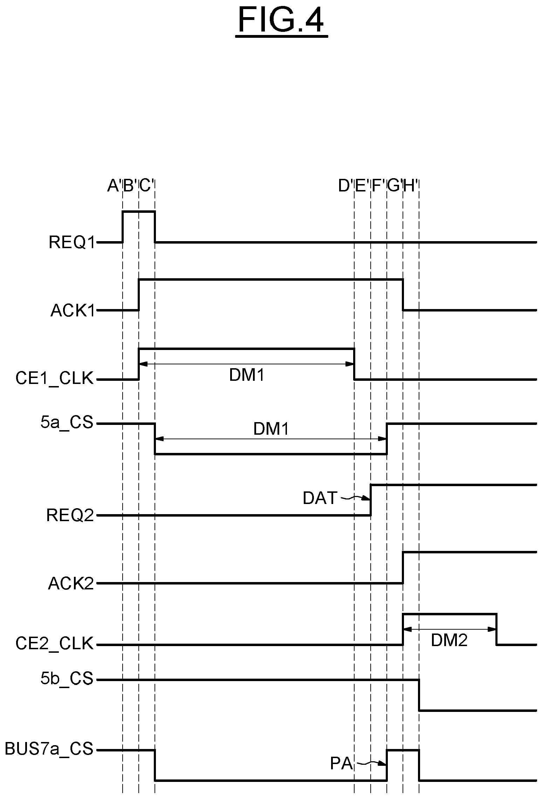

On se réfère maintenant à la figure 4 pour illustrer un autre exemple de mise en œuvre de la gestion d'accès à un bus de données, ici par exemple toujours le premier bus de données 7a.

Il convient de noter que les exemples illustrés sur les figures 3 et 4 peuvent également être mis en œuvre pour la gestion d'accès au deuxième bus de données 7b.

Les instants A' à C' sont identiques aux instants A à C illustrés sur la figure 3.

L'instant E' auquel le premier bus de données 7a reçoit une demande d'accès émanant de la deuxième interface 5b se situe après la fin du comptage ayant la première durée minimale de comptage DM1 (instant D'). En d'autres termes, la demande d'accès émanant de la deuxième interface 5b est ici considérée comme étant une demande d'accès tardive DAT.

Comme la demande d'accès tardive DAT est la première demande reçue à la suite de la première durée minimale de comptage DM1 alors que la transaction de la première interface 5a est toujours en cours, la première interface 5a est prête à libérer de façon imminente l'accès au premier bus de données 7a.

Par conséquent, les moyens de commande 6 sont configurés pour arrêter la transaction de la première interface 5a à l'instant F' et le signal ACK1 bascule en état bas au cycle suivant à l'instant G'.

Les moyens de commande 6 sont en outre configurés pour accorder l'accès au premier bus de données 7a à la deuxième interface 5b à l'instant G' et déclencher un comptage (CE2_clk) ayant la deuxième durée minimale de comptage DM2. La transaction de la deuxième interface 5b débute au cycle suivant à l'instant H'.

Ainsi, une transaction d'une interface ne sera pas interrompue de façon systématique et l'accès à un bus partagé par plusieurs interfaces est géré de façon équilibrée et équitable tout en prenant en compte une durée minimale de comptage dédié à une interface correspondante.

## Revendications

1. Procédé de gestion d'accès à un bus (7a) partagé par des interfaces (5a, 5b), comprenant
un déclenchement, lorsque l'accès audit bus est accordé à une des interfaces (5a, 5b), d'un comptage ayant une durée minimale de comptage (DM1, DM2), et
une libération de l'accès accordé à l'une des interfaces (5a, 5b)) et une création d'un point d'arbitrage (PA) à l'issue de la durée minimale (DM1, DM2) si au moins une demande d'accès audit bus (7a) émanant d'au moins une autre des interfaces (5a, 5b) est reçue pendant la durée minimale de comptage (DM1, DM2).

2. Procédé selon la revendication 1, comprenant en outre,
audit point d'arbitrage (PA), un arbitrage d'accès audit bus (7a) pour ladite au moins une autre des interfaces (5a, 5b) de façon à déterminer une interface autorisée (INTA), et
une autorisation d'accès audit bus pour l'interface autorisée (INTA) à la suite dudit arbitrage.

3. Procédé selon la revendication 1 ou 2, comprenant en outre une libération de l'accès accordé à l'une des interfaces (5a, 5b) et une autorisation d'accès audit bus (7a) pour une autre interface (5a, 5b) à la suite d'une demande d'accès tardive (DAT) audit bus (7a) émanant de cette autre interface (5a, 5b) si aucune demande d'accès n'est reçue pendant ladite durée minimale (DM1, DM2) et si la demande d'accès tardive (DAT) est reçue en premier à la suite de la durée minimale (DM1, DM2).

4. Procédé selon l'une quelconque des revendications précédentes, comprenant en outre une conservation de l'accès accordé à l'une des interfaces (5a, 5b) jusqu'à la fin d'occupation de l'accès si aucune demande d'accès audit bus (7a) n'est reçue avant la fin d'occupation.

5. Procédé selon une quelconque des revendications précédentes, dans lequel la durée minimale de comptage (DM1, DM2) est configurable et correspond à l'une des interfaces (5a, 5b).

6. Procédé selon une quelconque des revendications précédentes, dans lequel les interfaces (5a, 5b) comportent des interfaces périphériques séries.

7. Procédé selon la revendication 6, dans lequel les interfaces périphériques séries comportent au moins une interface périphérique série du type octal.

8. Procédé selon l'une quelconque des revendications précédentes, dans lequel ledit bus (7a) est un bus de données d'entrée-sortie.

9. Dispositif électronique comprenant des interfaces (5a, 5b) chacune comportant un compteur (CE1; CE2), un bus (7a) partagé par les interfaces (5a, 5b), et des moyens de commande (6) configurés pour
déclencher, lorsque l'accès audit bus (7a) est accordé à une des interfaces (5a, 5b), un comptage du compteur (CE1, CE2) de l'une des interfaces (5a, 5b) ayant une durée minimale de comptage (DM1, DM2), et
libérer l'accès accordé à l'une des interfaces (5a, 5b) et créer un point d'arbitrage (PA) à l'issue de la durée minimale (DM1, DM2) si au moins une demande d'accès audit bus (7a) émanant d'au moins une autre interface (5a, 5b) est reçue pendant la durée minimale de comptage (DM1, DM2).

10. Dispositif selon la revendication 9, dans lequel les moyens de commande (6) sont en outre configurés pour
effectuer, audit point d'arbitrage (PA), un arbitrage d'accès audit bus (7a) pour ladite au moins une autre des interfaces (5a, 5b) de façon à déterminer une interface autorisée (INTA), et
autoriser l'accès audit bus (7a) pour l'interface autorisée (INTA) à la suite dudit arbitrage.

11. Dispositif selon la revendication 9 ou 10, dans lequel les moyens de commande (6) sont en outre configurés pour
libérer l'accès accordé à l'une des interfaces (5a, 5b) et autoriser l'accès audit bus (7a) pour une autre interface (5a, 5b) à la suite d'une demande d'accès tardive (DAT) audit bus (7a) émanant de cette autre interface (5a, 5b) si aucune demande d'accès n'est reçue pendant la durée minimale (DM1, DM2) et si la demande d'accès tardive (DAT) est reçue en premier à la suite de la durée minimale (DM1, DM2).

12. Dispositif selon l'une quelconque des revendications 9 à 11, dans lequel les moyens de commande (6) sont en outre configurés pour
maintenir l'accès accordé à l'une des interfaces (5a, 5b) jusqu'à la fin d'occupation de l'accès si aucune demande d'accès audit bus (7a) n'est reçue avant la fin d'occupation.

13. Dispositif selon l'une quelconque des revendications 9 à 12, dans lequel la durée minimale de comptage (DM1, DM2) est configurable et correspond à l'une des interfaces (5a, 5b).

14. Dispositif selon l'une quelconque des revendications 9 à 13, dans lequel les interfaces (5a, 5b) comportent des interfaces périphériques séries.

15. Dispositif selon la revendication 14, dans lequel les interfaces périphériques séries (5a, 5b) comportent au moins une interface périphérique série du type octal.

16. Dispositif selon l'une quelconques des revendications 9 à 15, dans lequel ledit bus (7a) est un bus de données d'entrée-sortie.

17. Appareil électronique comportant un dispositif selon l'une quelconque des revendications 9 à 16, et un module de multiplexage (3) couplé aux moyens de commande (6).

18. Appareil électronique selon la revendication 17, dans lequel le module de multiplexage (3) comporte un jeu de broches d'entrée-sortie destiné à être couplé à des moyens de mémoire (9) comportant plusieurs mémoires externes (MNV, MV).

19. Appareil électronique selon la revendication 17, dans lequel le module de multiplexage (3) comporte autant de jeux de broches d'entrée-sortie (8a, 8b) que d'interfaces (5a, 5b) et chaque jeu de broches d'entrée-sortie est destiné à être couplé à une mémoire externe (MVN, MV).

20. Appareil électronique selon l'une des revendications 17 à 19, formant un système sur puce.
